# EUROPÄISCHE PATENTSCHRIFT

(11) **EP 2 063 752 B1**
(45) Veröffentlichungstag und Bekanntmachung des Hinweises auf die Patenterteilung: **27.02.2013**
(21) Anmeldenummer: 07857434.0
(22) Anmeldetag: 12.12.2007
(51) Int. Cl.: A47L 9/04, A46B 13/00

(54) **BÜRSTE, INSBESONDERE BÜRSTE ZUR ANORDNUNG IN EINEM STAUBSAUGER-VORSATZGERÄT**
BRUSH, IN PARTICULAR BRUSH TO BE ARRANGED IN A VACUUM CLEANER ATTACHMENT DEVICE
BROSSE, EN PARTICULIER BROSSE À DISPOSER DANS UN ACCESSOIRE D'ASPIRATEUR

(30) Priorität: 12.12.2006 DE 102006058401
(43) Veröffentlichungstag der Anmeldung: 03.06.2009
(73) Patentinhaber: Vorwerk & Co. Interholding GmbH, 42275 Wuppertal (DE)
(72) Erfinder: RÖLLINGHOFF, Dirk, 58091 Hagen (DE); EHRING, Ingo, 46238 Bottrop (DE); KRAUS, Roland, 40822 Mettmann (DE)
(74) Vertreter: Müller, Enno
(86) Internationale Anmeldenummer: PCT/EP2007/063765
(87) Internationale Veröffentlichungsnummer: WO 2008/071728

(56) Entgegenhaltungen:
- DE-A1- 4 412 986
- DE-A1- 19 621 301
- GB-A- 504 058
- GB-A- 2 000 962
- GB-A- 2 146 238
- US-A- 2 372 404
- US-A- 3 737 937
- US-A- 3 754 802
- US-A1- 2006 042 042

## Beschreibung

Die Erfindung betrifft eine Bürste, insbesondere Bürste zur Anordnung in einem Vorsatzgerät eines elektrisch betreibbaren Staubsaugers, mit einem röhrenartigen Bürstenkörper und darauf befestigten Borsten, wobei der Bürstenkörper im Bereich eines Endes eine Kupplungsausbildung zur Drehzusammenwirkung mit einer geräteseitig angetriebenen Welle und im Bereich des anderen Endes eine Verschlusskappe aufweist, wobei die Antriebswelle sowohl im Bereich der Kupplungsausbildung als auch im, der Verschlusskappe zugewandten Endbereich in radialer Richtung abgestützt ist.

Bürsten der in Rede stehenden Art sind bekannt, so beispielsweise aus der EP 0 912 131 B1. Diese Bürste ist als Hohl-Zylinderkörper ausgeformt, in welchem eine Antriebswelle des Bürstengeräts einsteckbar ist. Die drehfeste Kupplung der Bürste auf der Antriebswelle erfolgt über einen auf der Antriebswelle drehfest gehalterten Mitnehmer, welcher mit radial nach innen vorspringenden Mitnahmevorsprüngen des Bürstenkörpers zusammenwirkt. Das der Antriebswellen-Einsteckseite der Bürste gegenüberliegende Ende ist mit einer Endkappe verschlossen, in welche Gewichte zum Ausgleich einer gegebenenfalls vorhandenen Unwucht der Bürste eingelassen sein können. Weiter ist diesbezüglich bekannt, im Bereich des freien Wellenendes, zugewandt der bürstenseitigen Verschlusskappe eine Radialabstützung der Bürste über ein mit dem Bürstenkörper fest verbundenes Abstützelement zur realisieren, so beispielsweise in Form einer dem Wellenaußendurchmesser angepassten Aufsteckhülse.

Im Hinblick auf den zuvor beschriebenen Stand der Technik wird eine technische Problematik der Erfindung darin gesehen, eine Bürste der in Rede stehenden Art insbesondere hinsichtlich einer verlängerten Betriebsdauer, bei weiter verminderter Geräuschemission im Betriebszustand weiter zu verbessern. Diese Problematik ist zunächst und im Wesentlichen durch den Gegenstand des Anspruchs 1 gelöst, wobei darauf abgestellt ist, dass die kappenseitige Radialabstützung der Welle durch einen federnd in Radialrichtung auf die Welle einwirkenden Lagerabschnitt gebildet ist. Zufolge dieser Ausgestaltung ist eine Lagerung, insbesondere endseitig der Verschlusskappe zugewandte Lagerung der Bürste erreicht, die bei Einhaltung einer das Aufschieben der Bürste auf die Welle weiterhin ermöglichenden relativ geringen axialen Aufschiebekraft ein gegen Null tendierendes Radialspiel zwischen Bürstenlager und Antriebswelle bietet. Es kommt hierzu eine radial gefederte Lagerung zum Einsatz. Die radiale Feder verhindert den direkten Kontakt des Bürstenkörpers mit der Welle. Bei Einwirkung einer äußeren radialen Kraft auf die Bürste wird zufolge der federnden Eigenschaften des Lagerabschnittes die Stoßenergie aufgenommen und wieder abgegeben. Dadurch bedingt, dass durch die gewählte Ausgestaltung das Spiel zwischen Bürste bzw. Bürstenkörper und Antriebswelle annähernd gleich Null ist, ist auch die Geräuschemission in vorteilhafter Weise stark reduziert. Die gewählte Lösung erweist sich im Hinblick auf das gewünschte Null-Spiel als kostengünstig. Es bedarf keiner präzisen Ausgestaltung von Welle und Lagerabschnitt mit Toleranzen im Hundertstel-Millimeterbereich. Auch hinsichtlich der E-Module der Werkstoffpaarungen bietet die gewählte Lösung mehr Möglichkeiten. Bei den bekannten starren Lagerabschnitten wird der Effekt erhöhter Geräuschemission durch gegeneinander schlagende Wellen und Lager mit steigenden E-Modulen der Werkstoffpaarungen noch größer. Überraschenderweise ergeben sich durch die federnde Ausgestaltung des Lagerabschnittes auch Vorteile hinsichtlich der axialen Aufschiebung der Bürste auf die Welle.

Der federnd ausgeformte Lagerabschnitt kann in einfachster Weise aus dem Bürstenkörper herausgeformt, d. h. mit diesem verbunden ausgebildet sein. So weiter beispielsweise bei einer Herstellung des Bürstenkörpers im Kunststoffspritzverfahren durch entsprechende Anformung des federnd ausgebildeten Lagerabschnitts an der der zentralen Röhrenöffnung des Bürstenkörpers zugeordneten Körperwandung. Dies bei entsprechender durchmesservergrößerter Ausgestaltung der zentralen Röhrenöffnung gegenüber dem Wellenaußendurchmesser, welcher Durchmesserunterschied durch den federnd ausgeformten Lagerabschnitt überbrückt wird. Bevorzugt wird eine Ausgestaltung, bei welcher der Lagerabschnitt an einem gesonderten Einsatzteil ausgebildet ist. Demzufolge braucht es herstellungsmäßig keiner entsprechenden Bearbeitung der die Welle aufnehmenden Röhrenwandung des Bürstenkörpers zur Ausformung des Lagerabschnitts. Vielmehr wird dieser gesondert hergestellt und dem Bürstenkörper zugeordnet. Entsprechend können Bürstenkörper und Lagerabschnitt aus unterschiedlichen Materialien gefertigt sein, so beispielsweise Bürstenkörper aus einem Kunststoffmaterial und der Lagerabschnitt als Federmetallelement. Bevorzugt wird diesbezüglich, dass das Einsatzteil aus einem Kunststoffmaterial besteht und dass die federnde Ausbildung des Lagerabschnittes durch Freischneiden von einzelnen Anlageabschnitten aus dem Lagerabschnitt erreicht ist. Diese Anlageabschnitte erstrecken sich beispielsweise zungenförmig in bzw. annähernd in Axialerstreckung des Bürstenkörpers und somit auch zur einzusteckenden Welle. Die Freischneidung der einzelnen Anlageabschnitte erfolgt durch entsprechende Ausbildung einer Kunststoffspritzform zur Herstellung des Einsatzteiles, wobei hinsichtlich der federnden Anlageabschnitte ein radiales Abstandsmaß der dem Wellenumfang zuzuordnenden Anlagebereiche gewählt ist, welches gleich oder, wie bevorzugt, geringfügig kleiner gewählt ist als der Wellenaußendurchmesser, so dass die Anlageabschnitte in der aufgesteckten Stellung der Bürste auf der Welle bereits unter leichter Federvorspannung mantelaußenseitig die Welle beaufschlagen. Derartig ausgebildete Anlageabschnitte können von radial außen einwirkende Stöße aufnehmen und dämpfen. In bevorzugter Ausgestaltung wirken die Anlageabschnitte mit einem kreiszylindrischen Endabschnitt der Welle zusammen. In diesem Zusammenhang wird bevorzugt, dass das gesonderte Einsatzteil drehfest mit dem Bürstenkörper verbunden ist. So beispielsweise durch Formschluss, alternativ auch durch Kraftschluss. Über die Kupplungsausbildung zwischen Welle und Bürste ist die drehfeste Verbindung von Welle und Bürste gesichert, womit die endseitige Ausgestaltung der Welle zur Zusammenwirkung mit den Anlageabschnitten des Lagerabschnittes nicht zwingend kreiszylindrisch ausgestaltet sein muss. Auch kann dieser Endbereich der Welle beispielsweise mit gegenüberliegenden Abflachungen versehen sein, auf welchen die Anlageabschnitte des Einsatzteils aufliegen. Darüber hinaus können auf der Welle auch über den Umfang verteilt drei oder mehr Abflachungen vorgesehen sein, die in Anzahl und Anordnung mit entsprechenden Anlageabschnitten des Einsatzteils korrespondieren.

Der Lagerabschnitt ist hohlzylindrisch ausgebildet, mit einem Innendurchmesser, der dem Wellenaußendurchmesser angepasst ist, so weiter im unmittelbaren Bereich der Anlageabschnitte dem Wellenaußendurchmesser entspricht oder geringfügig kleiner gewählt ist. Es ist eine gleichmäßige Verteilung von Anlageabschnitten über den Umfang vorgesehen, so weiter eine Verteilung, die ein Verkanten der Bürste bei entsprechender Radialbeaufschlagung von außen verhindert. So ist bevorzugt, dass über den Umfang des Lagerabschnitts betrachtet vier gleichmäßig zueinander beabstandete Anlageabschnitte ausgebildet sind. Es können derart auch drei, fünf, sechs oder auch sieben bis zehn solcher zungenartiger Anlageabschnitte vorgesehen sein.

Der Lagerabschnitt ist im Bereich des freien, in den Hohlraum der Bürste einragenden Endes des Einsatzteiles ausgebildet, wobei die Anlageabschnitte dem freien Ende des Lagerabschnitts zugeordnet umfangsmäßig miteinander verbunden sind. So insbesondere durch Anformung eines die Anlageabschnitte endseitig verbindenden Rings. Letzterer weist bevorzugt einen dem Lagerabschnitt im allgemeinen entsprechenden Außendurchmesser auf. Der Innendurchmesser kann hierbei, wie auch grundsätzlich der Innendurchmesser des Lagerabschnittes außerhalb des Bereiches der Anlageabschnitte, gegenüber dem Wellenaußendurchmesser vergrößert sein. Zufolge dieser Ausgestaltung kragen die einzelnen zungenförmigen Anlageabschnitte nicht zum freien Ende des Einsatzteiles bzw. des Lagerabschnittes hin frei aus. Vielmehr sind diese miteinander verbunden, was zu einer Stabilität des gesamten Lagerabschnitts führt. Die somit beidseitig endseitig gefassten, federnden Anlageabschnitte wirken zufolge dieser Ausgestaltung streng in radialer Richtung.

Der mit Bezug zu dem freien Ende des gesonderten Einsatzteils vor den freigeschnittenen, federnden Anlageabschnitten belassene hohlzylindrische Lagerabschnitt weist einen gegenüber dem Wellenaußendurchmesser geringfügig vergrößerten Innendurchmesser auf. Dieser Bereich stellt einen Überlastschutz und Notlaufbereich dar. Bei einer Überlastung der federnden Anlageabschnitte kann die Welle in diesem relativ eng toleriert geschlossenem Bereich zur Anlage kommen.

Der Lagerabschnitt geht abgewandt dem freien Ende des Einsatzteils über in einen Außendurchmesser-vergrößerten Festlegungsbereich, zur Zusammenwirkung mit dem Bürstenkörper, insbesondere mit der Innenwandung der zentralen Röhrenöffnung. Über diesen Festlegungsbereich wird eine drehfeste Verbindung zwischen Einsatzteil und Bürstenkörper erreicht, dies beispielsweise durch Verkleben. Bevorzugt entspricht der Außendurchmesser des Festlegungsbereiches dem 1,05 bis 1,2-fachen des Außendurchmessers des Lagerabschnittes, wobei weiter der durchmesservergrößerte Festlegungsbereich zur Presssitzfestlegung des Einsatzteiles in dem Bürstenkörper dient. So ist der Außendurchmesser des Festlegungsbereiches angepasst an den Innendurchmesser des hohlzylindrischen Bürstenkörpers.

Der Festlegungsabschnitt kann in einfachster Weise als massiver Zylinderkörper gebildet sein, dies in Anlehnung an den kreisrunden Öffnungsquerschnitt der zentralen Bohrung des Bürstenkörpers. Alternativ kann zumindest der dem Festlegungsabschnitt zugeordnete zentrale Öffnungsbereich des Bürstenkörpers auch im Querschnitt mehreckig geformt sein, was weiter auch eine entsprechende mehreckige Querschnittsgestaltung des Festlegungsabschnittes ermöglicht. Auch ist hierdurch die drehfeste Anbindung des Festlegungsabschnittes bzw. des gesamten Einsatzteiles an dem Bürstenkörper realisiert. Alternativ kann der Festlegungsabschnitt auch nur über einem Presssitz erreicht sein. Auch kann der Festlegungsabschnitt einen Kreuzsteg-Querschnitt aufweisen, dies weiter bei kreisscheibenförmiger Querschnittsausgestaltung der zentralen Bürstenkörperbohrung. Die Kreuzstege tragen hierbei zur drehfesten Zusammenwirkung mit der Innenwandung des Bürstenkörpers im Querschnitt ringförmige, mit radialem Übermaß versehene Presssitzerhebungen.

In einer weiter bevorzugten Ausgestaltung sind der Festlegungsabschnitt und der Lagerabschnitt, einen Einsteckabschnitt bildend, einstückig ausgebildet. Dieser Einsteckabschnitt ist Teil des Einsatzteils. Festlegungsabschnitt und Lagerabschnitt liegen hierbei in axialer Hintereinanderlage. Als besonders vorteilhaft erweist sich diesbezüglich, wenn der Einsteckabschnitt einstückig mit der Verschlusskappe gebildet ist. Letztere kann weiter beispielsweise auch zur Handhabung der Bürste bei einem Wechsel dienen. Zudem können in der Verschlusskappe stirnseitig beispielsweise Einsenkungen vorgesehen sein, in die Gewichte zum Auswuchten der Bürste gemäß dem beschriebenen Stand der Technik eingesetzt sein können. In bevorzugter Ausgestaltung ist der Einsteckabschnitt einstückig mit der Verschlusskappe im Kunststoffspritzverfahren hergestellt, wobei der Außendurchmesser der Verschlusskappe dem Außendurchmesser des Bürstenkörpers zumindest im Bereich des Borstenansatzes entspricht. Umfangsmäßig außerhalb des Bereichs des Borstenansatzes überfängt die in einem Grundriss bevorzugt kreisscheibenförmige Verschlusskappe partiell die Bürstenkörper-Mantelwandung, zur Bildung von Hintergriffabschnitten, welche zum Abziehen der Bürste von der Welle benutzt werden können.

Das so gebildete Einsatzteil dient sowohl zur axialen als auch radialen Fixierung des Bürstenkörpers auf der Welle und darüber hinaus zur Überdeckung des freien Bürstenkörperendes. Die tellerartige Verschlusskappe dient zum einen als axialer Anschlag der Verschlusskappe an dem Bürstenkörper und zum anderen als Griff zum Abziehen der gesamten Bürste von der Welle. Der quer zur Wellenachse sich erstreckende, zwischen dem hohlzylindrischen Lagerabschnitt und dem massiven Festlegungsabschnitt sich einstellende Boden wirkt als axialer Endanschlag. Bei Berührung der Welle im Zuge des Aufschiebens erreicht die Bürste ihre axiale Endlage. Zudem ist hierdurch ein Überlastschutz gegen Auftreten größerer axialer Kräfte gegeben. Solche Kräfte werden in den Verbindungsbereich zur Büste weitergeleitet. Der gefederte Bereich übernimmt in Nennlage und Normalfunktion die Zentrierung der Bürste auf der Welle. Die Feder ist hierbei so abgestimmt, dass es durch ein Untermaß zur Welle zur Vorspannung der Feder beim Aufschieben auf die Welle kommt. Diese Vorspannung verhindert zum einen das unabsichtliche Abgleiten der Bürste von der Welle beispielsweise bei einem Schiefhalten des Gerätes und zum anderen die Kollision der bevorzugt aus Stahl hergestellten Welle mit dem Kunststoff-Bürstenkörper. Die radiale Federung an dem Einsatzteil ermöglicht des Weiteren die Verwendung eines verschleißfesten Lagerwerkstoffes, der nicht gleich dem der Bürste sein muss. Hier kann zudem kann auch ein Werkstoff gewählt werden, der sehr gute Federeigenschaften und bei Kollision gute Dämpfungseigenschaften aufweist. Der verfederte Bereich erzeugt eine Reibkraft auch in axialer Richtung auf der Welle und dient somit weiter als Schutz vor ungewolltem Verlieren der Bürste von der Welle, dies insbesondere im Zuge einer Montage bevor die Kupplung in dem dem Kappenende abgewanden Ende greift.

Nachstehend ist die Erfindung anhand der beigefügten Zeichnung, welche lediglich zwei Ausführungsbeispiele darstellt, näher erläutert. Es zeigt:
- Fig. 1: ein Vorsatzgerät für einen elektrisch betreibbaren Staubsauger in Unteransicht mit in strichpunktierter Linienart dargestellten Bürsten;

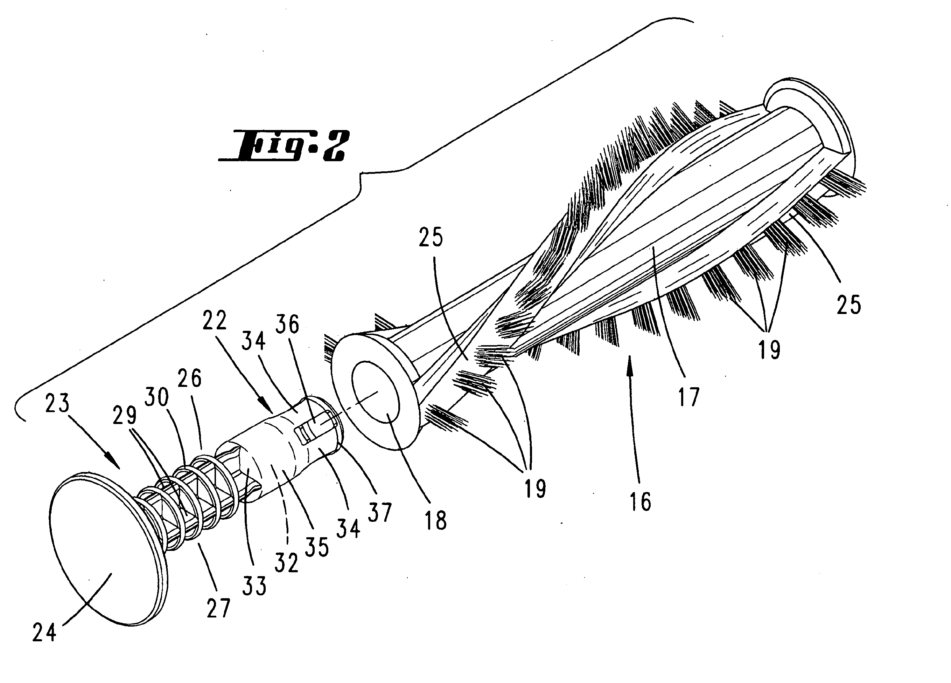

- Fig. 2: eine erfindungsgemäße Bürste in perspektivischer Darstellung mit diesem zugeordneten, gesonderten Einsatzteil;
- Fig. 3: einen Längsschnitt durch einen Endbereich der in Betriebsstellung gehalterten Bürste;
- Fig. 4: das Einsatzteil in perspektivischer Einzeldarstellung.
- Fig. 5: eine der Fig. 3 entsprechende Darstellung, einer zweite Ausführungsform betreffend.

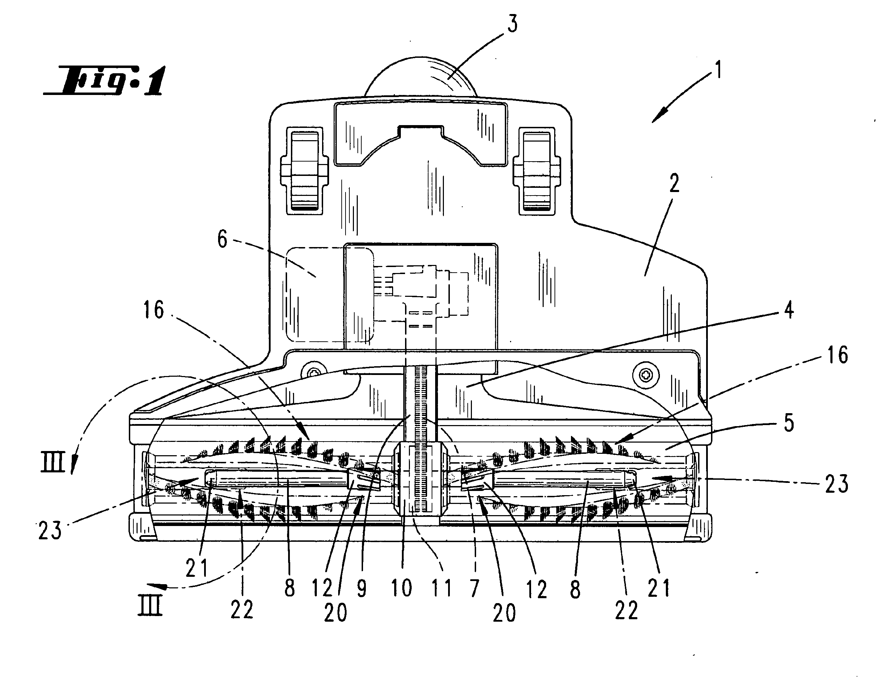

Dargestellt und beschrieben ist zunächst mit Bezug zu Fig. 1 ein Vorsatzgerät 1 in Form eines elektromotorisch angetriebenen Bürstengeräts für einen Staubsauger. Das Vorsatzgerät 1 weist zunächst ein Gehäuse 2 und einen Rohranschlussstutzen 3 auf. In dem Gehäuse 2 erstreckt sich ein Saugkanal 4 von dem Rohranschlussstutzen 3 ausgehend bis in einen Saugraum 5. Letzterer befindet sich in einem stirnseitigen Bereich, welcher dem Rohranschlussstutzen 3 abgewandt ist und erstreckt sich nahezu über die gesamte Gehäusebreite.

Des Weiteren ist in dem Gehäuse 2 ein separater Antrieb 6 angeordnet, welcher über einen Zahnriemen 7 eine sich in den Saugraum 5 erstreckende Antriebswelle 8 in Rotation versetzt. Der Zahnriemen 7 liegt in einem Riemengehäuse ein, welches an dem der Antriebswelle 8 abgewandten Ende schwenkbeweglich gelagert ist. Die Schwenkachse bildet zugleich die Kraftübertragungsachse von dem separaten Antrieb 6 auf den Zahnriemen 7 und liegt parallel zur Achse der Antriebswelle 8.

Der Zahnriemenantrieb bzw. das Riemengehäuse 9 erstreckt sich etwa von der Mitte des Saugraumes 5 ausgehend senkrecht zur Antriebswelle 8. An dem der Antriebswelle 8 zugeordneten Ende greift der Zahnriemen 7, jedenfalls innerhalb eines Getriebegehäuse 10, auf eine Antriebsscheibe 11, von der beidseitig die zweigeteilte Antriebswelle 8 ausgeht. Letztere erstreckt sich somit jeweils von der Antriebsscheibe 11 ausgehend bis in einen seitlichen Endbereich des Saugraumes 5.

Jede Antriebswelle 8 trägt benachbart dem Getriebegehäuse 10, weiter etwa mit dem Maß des Wellendurchmessers beabstandet, einen Mitnehmer 12.

Das Vorsatzgerät 1 ist zur Verwendung als üblicher Vorsatz für einen Elektro-Staubsauger zum Pflegen von Teppichböden, insbesondere zum Absaugen derselben, mit Bürsten 16 bestückt. Diese Bürsten 16 sind in der Fig. 1 strichpunktiert dargestellt.

Jede Bürste ist als Hohlkörper ausgebildet, weist entsprechend einen aus einem Kunststoffwerkstoff bestehenden Bürstenkörper 17 auf, der mit einer zentralen rohrartigen Bohrung 18 versehen ist. Außenseitig ist der Bürstenkörper mit zwei um 180° versetzt angeordneten Borstenreihen 19 versehen, welche sich von einem Endbereich des Bürstenkörpers 17 ausgehend um ca. 180° spiralförmig um den Bürstenkörper 17 erstrecken.

Die Bürsten 16 sind auf die Antriebswellen 8 gesteckt und erstrecken sich in eingebautem Zustand etwa von dem Getriebegehäuse 10 ausgehend bis in den jeweiligen Seiten-Endbereich des Saugraumes 5. Die Kraftübertragung von der Antriebswelle 8 auf die jeweilige Bürste 16 erfolgt über den Mitnehmer 12 der Antriebswelle 8. Die Kupplungsausbildung 20, bestehend aus achsseitigem Mitnehmer 12 und bürstenkörperseitigen Mitnahmeelementen kann wie in der eingangs erwähnten EP 0 912 131 B1 gelöst sein. In dem dargestellten Ausführungsbeispiel ist jeder Mitnehmer 12 außenseitig mit in einer Projektion auf die Welle 8 spitzwinklig zur Wellenachse spiralansatzförmig verlaufenden Mitnehmerrippen versehen, die in Zusammenwirkung mit entsprechend ausgebildeten Nuten im Bürstenkörper 17 ein Anziehen der Bürste 16 im Betrieb nach axial innen in Richtung auf das Getriebegehäuse 10 bewirken.

Über die Kupplungsausbildung 20 ist die Bürste 16 im Betrieb drehfest an der Antriebswelle 8 gehaltert; darüber hinaus hierbei auch gegen Abzug von der Welle 8 in Axialrichtung nach außen, d. h. zu dem dem Getriebegehäuse 10 abgewandten freien Ende der Antriebswelle 8. Des Weiteren bietet die Küpplungsausformung, insbesondere der Mitnehmer 12 jeder Antriebswelle 8 eine Radialabstützung der Bürste 16, insbesondere des Bürstenkörpers 17 in dem Getriebegehäuse 10 zugewandten Endbereich.

Eine weitere Radialabstützung erfährt die Bürste 16 im Bereich des freien Endes 21 der Antriebswelle 8. Hierzu ist ein federnd eingestellter Lagerabschnitt 22 der Bürste 16 vorgesehen.

Der Lagerabschnitt 22 ist Teil eines im Kunststoffspritzverfahren hergestellten Einsatzteiles 23. Dieses weist zunächst eine tellerförmige Verschlusskappe 24 auf. Die Verschlusskappe 24 besitzt einen Durchmesser a, der größer gewählt ist als der Außendurchmesser b des Bürstenkörpers 17 außerhalb des stegförmig umlaufenden Borstenansatzes 25. Der Scheibendurchmesser a der Verschlusskappe 24 entspricht hierbei im Wesentlichen dem Durchmesser des durch die leistenartigen Borstenansätze 25 definierten Mantels.

Durch den über den Umfang betrachteten partiellen, nämlich zwischen den Borstenansätzen 25 ausgeformten Radialvorsatz wird ein Hintergriff angeboten, mittels welchem die Bürste 16 leicht erfasst und axial nach außen abgezogen werden kann.

Die Verschlusskappe 24 liegt in der Betriebsstellung, d. h. in der der Bürste 16 zugeordneten Stellung plan auf der ihr zugewandten Stirnfläche des Bürstenkörpers 17 auf.

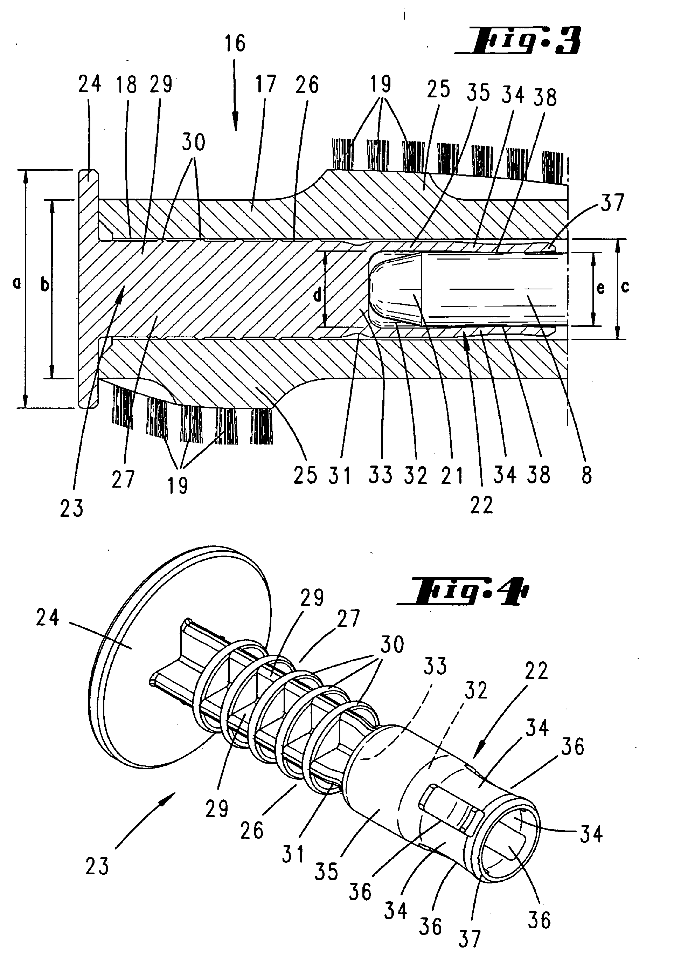

Von einer Flachseite der Verschlusskappe 24 wächst zentral senkrecht zu der Oberflächenebene ein Einsteckabschnitt 26 aus. Dessen Querschnitt ist größenmäßig angepasst an den Innendurchmesser c des Bürstenkörpers 17 im Bereich der zentralen Bohrung 18. Der Innendurchmesser c des Bürstenkörpers 17 ist im wie in Fig. 3 gezeigten Endbereich zur Aufnahme des Einsteckabschnitts 26 und des freien Endes der Antriebswelle 8 über die axiale Länge gleich. Der Einsteckabschnitt 26 ist einstückig an der Verschlusskappe 24 angeformt und setzt sich über die Axialerstreckung betrachtet, ausgehend von der Verschlusskappe 24 zusammen aus einem Festlegungsabschnitt 27 und dem Lagerabschnitt 22.

Der Festlegungsabschnitt 27 ist zwischen der Verschlusskappe 24 und dem endseitigen Lagerabschnitt 22 positioniert, mit einer axialen Länge, die dem axialen Überstandsmaß des Bürstenkörpers 17 über das freie Ende 21 der Antriebswelle 8 hinweg im Wesentlichen entspricht. Der Festlegungsabschnitt 27 weist einen Kreuzsteg-Querschnitt auf. Die Kreuzstege 29 sind gegenüber dem Durchmessermaß c der Bürstenkörper-Bohrung 18 in ihrer Quer-Erstreckung verringert und tragen im Querschnitt ringförmige Presssitzerhebungen 30. Diese sitzen radial außen auf den Kanten der Kreuzstege 29 auf, sind dementsprechend gegenüber der Kreuzstegabmessung durchmesservergrößert, so weiter mit einem radialen Übermaß gegenüber dem Bohrungsmaß c. Über den Festlegungsabschnitt 27 mit seinen Erhebungen 30 ist das Einsatzteil 23 im Presssitz in dem Bürstenkörper 17 festgelegt, so weiter auch drehfest mit dem Bürstenkörper 17 verbunden.

Der sich an dem Festlegungsabschnitt 27 anschließende Lagerabschnitt 22 ist im Wesentlichen hohlzylindrisch ausgebildet, mit einem Innendurchmesser d, der dem Wellenaußendurchmesser e angepasst ist.

Der Übergangsbereich von Festlegungsabschnitt 27 zu Lagerabschnitt 22 ist mit einer radialen Einschnürung 31 versehen. Im Bereich dieser Einschnürung 31 ist der hohlzylindrische Aufnahmeraum 32 des Lagerabschnitts 22 mit einem sich quer zur Achse erstreckenden Boden 33 versehen. Dieser Boden 33 bietet einen Axialanschlag für die Bürste 16 in Richtung auf das Getriebegehäuse 10 durch anschlagbegrenztes Anstoßen des Bodens 33 gegen die freie Stirnfläche der Antriebswelle 8.

Der Festlegungsabschnitt 27 weist einen im Bereich der Presssitzerhebungen 30 gemessenen Außendurchmesser auf, der etwa dem 1,05-fachen des Außendurchmessers im Bereich des Lagerabschnittes 22 entspricht. Demzufolge liegt der Lagerabschnitt 22 in bevorzugter Stellung berührungsfrei in der Bürstenkörper-Bohrung 18 ein.

Der sich an dem Festlegungsabschnitt 27 unmittelbar anschließende Bereich des Lagerabschnitts 22 ist topfförmig gestaltet, wobei der Boden 33 den Topfboden formt. Dieser Topf geht über in vier über den Umfang gleichmäßig verteilt angeordnete, sich aus der Topfwandung in Axialrichtung erstreckende Anlageabschnitte 34. Diese sind zunächst zu dem topfförmigen Abschnitt 35 radial verringert und über den Umfang betrachtet durch Freischnitte 36 zueinander beabstandet. Endseitig, d. h. entlang der dem topfförmigen Abschnitt 35 abgewandten Stirnrandkanten sind die Anlageabschnitte 34 über einen einstückig angeformten Ring 37 verbunden, welcher Ring 37 den Durchmesser der zugeordneten Anlageabschnittenden aufnimmt.

Die Anlageabschnitte 34 sind sich taillenförmig radial verjüngend ausgebildet, wobei die Anlageabschnitte 34 in Richtung auf den Ring 37 sich wieder radial leicht erweitern. Es ergeben sich entsprechend Anlagezonen 38 der Anlageabschnitte 34 über die kreissegmentartig eine Anlage auf der zugeordneten Mantelwandung der Achse 8 erreicht ist.

Der Innendurchmesser der von den Anlageabschnitten 34 radial innen beschriebenen Mantelwandung insbesondere im Bereich der Anlagezonen 38 ist etwas geringer bemessen als der Wellenaußendurchmesser e, so dass die Anlageabschnitte 34 auch in Ruhestellung unter leichter Federvorspannung in Anlage an die Mantelwandung der Antriebswelle 8 treten.

Der federnd ausgebildete Lagerabschnitt 22, insbesondere dessen Anlageschnitte 34 verhindern den direkten Kontakt des Bürstenkörpers 17 mit der Antriebswelle 8 und nehmen in vorteilhafter Weise bei Einwirkung einer äußeren radialen Kraft auf die Bürste 16 die Stoßenergie auf. Sofern der äußere Stoß mehr Energie aufweist als die ausgeformte Feder in der Lage ist aufzunehmen, dämpft diese zumindest den Aufprall und dient weiter durch den gewählten Werkstoff noch als Dämpfer.

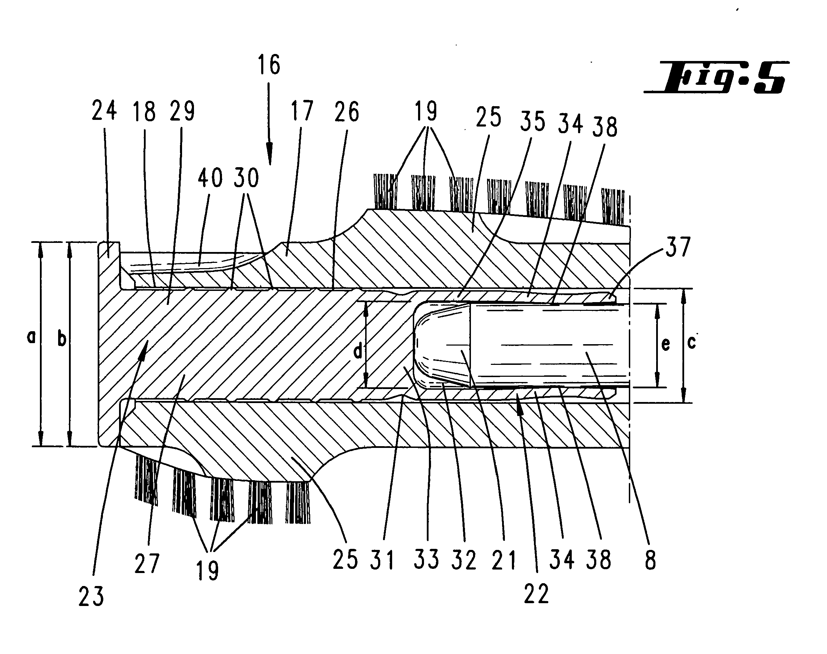

In Fig. 5 ist eine alternative Ausführungsform dargestellt, bei welcher der Außendurchmesser a der Verschlusskappe 24 dem Außendurchmesser b des Bürstenkörpers 17 entspricht. Zur Erleichterung der Handhabung bei der Bürstenentnahme sind im Endbereich des Bürstenkörpers 17, zugewandt der Verschlusskappe 24 den Bürstenkörper-Durchmesser verringernde Abflachungen 40 zwischen den leistenartigen Borstenansätzen 25 ausgebildet, womit für die greifenden Finger ein Hinterschnitt gegenüber der Verschlusskappe 24 geschaffen ist. Dieser ermöglicht eine griffige Krafteinleitung zum axialen Abziehen der Bürste 16 von der Welle 8.

## Patentansprüche

1. Bürste (16), insbesondere Bürste (16) zur Anordnung in einem Vorsatzgerät (1) eines elektrisch betreibbaren Staubsaugers, mit einem röhrenartigen Bürstenkörper (17) und darauf befestigten Borsten (19), wobei der Bürstenkörper (17) im Bereich eines Endes eine Kupplungsausbildung (20) zur Drehzusammenwirkung mit einer geräteseitig angetriebenen Welle (8) und im Bereich des anderen Endes eine Verschlusskappe (24) aufweist, wobei die Antriebswelle (8) sowohl im Bereich der Kupplungsausbildung (20) als auch im, der Verschlusskappe (24) zugewandten Endbereich in radialer Richtung abgestützt ist, **dadurch gekennzeichnet, dass** die kappenseitige Radialabstützung der Welle (8) durch einen federnd in Radialrichtung auf die Welle (8) einwirkenden Lagerabschnitt (22) gebildet ist.

2. Bürste nach Anspruch 1, **dadurch gekennzeichnet, dass** der Lagerabschnitt (22) an einem gesonderten Einsatzteil (23) ausgebildet ist, wobei, bevorzugt das Einsatzteil (23) aus einem Kunststoffmaterial besteht und dass die federnde Ausbildung des Lagerabschnitts (22) durch Freischneiden von einzelnen Anlageabschnitten (34) aus dem Lagerabschnitt (22) erreicht ist.

3. Bürste nach einem oder mehreren der vorhergehenden Ansprüche, **dadurch gekennzeichnet, dass** die Anlageabschnitte (34) mit einem kreiszylindrischen Endabschnitt (21) der Welle (8) zusammenwirken.

4. Bürste nach einem oder mehreren der vorhergehenden Ansprüche, **dadurch gekennzeichnet, dass** der Lagerabschnitt (22) hohlzylindrisch ausgebildet ist, mit einem Innendurchmesser (d), der dem Wellenaußendurchmesser (e) angepasst ist.

5. Bürste nach einem oder mehreren der vorhergehenden Ansprüche, **dadurch gekennzeichnet, dass** über den Umfang des Lagerabschnitts (22) betrachtet vier gleichmäßig zueinander beabstandete Anlageabschnitte (34) ausgebildet sind.

6. Bürste nach einem oder mehreren der vorhergehenden Ansprüche, **dadurch gekennzeichnet, dass** der Lagerabschnitt (22) im Bereich des freien, in den Hohlraum der Bürste einragenden Endes des Einsatzteiles (23) ausgebildet ist und dass die Anlageabschnitte (34) dem freien Ende des Lagerabschnitts (22) zugeordnet umfangsmäßig miteinander verbunden sind.

7. Bürste nach einem oder mehreren der vorhergehenden Ansprüche, **dadurch gekennzeichnet, dass** der Lagerabschnitt (22) abgewandt dem freien Ende des Einsatzteiles (23) übergeht in einen Außendurchmesser-vergrößerten Festlegungsbereich (27).

8. Bürste nach Anspruch 7, **dadurch gekennzeichnet, dass** der Außendurchmesser (c) des Festlegungsbereiches (27) dem 1,05 bis 1,2-fachen des Außendurchmessers des Lagerabschnittes (22) entspricht und/oder dass der Außendurchmesser des Festlegungsbereiches (27) angepasst ist an den Innendurchmesser (c) des hohlzylindrischen Bürstenkörpers (17).

9. Bürste nach einem oder mehreren der vorhergehenden Ansprüche 7, 8, **dadurch gekennzeichnet, dass** der Festlegungsabschnitt (27) als massiver Zylinderkörper gebildet ist.

10. Bürste nach einem oder mehreren der vorhergehenden Ansprüche 7,8,9, **dadurch gekennzeichnet, dass** der Festlegungsabschnitt (27) drehfest in dem Bürstenkörper (17) gehaltert ist.

11. Bürste nach einem oder mehreren der vorhergehenden Ansprüche 7 bis 10, **dadurch gekennzeichnet, dass** der Festlegungsabschnitt (27) einen Kreuzsteg-Querschnitt aufweist, welche Kreuzstege (29) zur drehfesten Zusammenwirkung mit der Innenwandung des Bürstenkörpers (17) im Querschnitt ringförmige, mit radialem Übermaß versehene Presssitzerhebungen (30) tragen.

12. Bürste nach einem oder mehreren der vorhergehenden Ansprüche 7 bis 11, **dadurch gekennzeichnet, dass** der Festlegungsabschnitt (27) und der Lagerabschnitt (22), einen Einsteckabschnitt (26) bildend, einstückig ausgebildet sind.

13. Bürste nach Anspruch 12, **dadurch gekennzeichnet, dass** der Einsteckabschnitt (26) einstückig mit der Verschlusskappe (24) gebildet ist.

14. Bürste nach einem oder mehreren der vorhergehenden Ansprüche 12, 13, **dadurch gekennzeichnet, dass** der Einsteckabschnitt (26) einstückig mit der Verschlusskappe (24) im Kunststoffspritzverfahren hergestellt ist.

15. Bürste nach einem oder mehreren der vorhergehenden Ansprüche, **dadurch gekennzeichnet, dass** der Außendurchmesser (a) der Verschlusskappe (24) dem Außendurchmesser des Bürstenkörpers (17) im Bereich des Borstenansatzes (25) entspricht.

## Claims

1. Brush (16), in particular a brush (16) to be arranged in an attachment (1) of an electrically operable vacuum cleaner, comprising a tubular brush body (17) and bristles (19) attached thereto, the brush body (17) comprising a coupling formation (20) for cooperating with an attachment-side driven shaft (8) in a rotatable manner in the region of one end and comprising a closure cap (24) in the region of the other end, the drive shaft (8) being supported in the radial direction both in the region of the coupling formation (20) and in the end region which faces the closure cap (24), **characterised in that** the cap-side radial support of the shaft (8) is formed by a bearing portion (22) which acts on the shaft (8) in a resilient manner in the radial direction.

2. Brush according to claim 1, **characterised in that** the bearing portion (22) is formed on a separate insert (23), the insert (23) preferably consisting of a plastics material, and **in that** the resilient formation of the bearing portion (22) is achieved by cutting free individual contact portions (34) from the bearing portion (22).

3. Brush according to one or more of the preceding claims, **characterised in that** the contact portions (34) cooperate with a cylindrical end portion (21) of the shaft (8).

4. Brush according to one or more of the preceding claims, **characterised in that** the bearing portion (22) is formed as a hollow cylinder, having an internal diameter (d) which is adapted to the external diameter (e) of the shaft.

5. Brush according to one or more of the preceding claims, **characterised in that** four contact portions (34) which are spaced apart at equal distances from each other are formed over the circumference of the bearing portion (22).

6. Brush according to one or more of the preceding claims, **characterised in that** the bearing portion (22) is formed in the region of the free end of the insert (23) that protrudes into the hollow space of the brush and **in that** the contact portions (34) which are associated with the free end of the bearing portion (22) are interconnected in a circumferential manner.

7. Brush according to one or more of the preceding claims, **characterised in that** the bearing portion (22) which faces away from the free end of the insert (23) transitions into a fixing region (27) having an enlarged external diameter.

8. Brush according to claim 7, **characterised in that** the external diameter (c) of the fixing region (27) corresponds to 1.05 to 1.2 times the external diameter of the bearing portion (22) and/or **in that** the external diameter of the fixing region (27) is adapted to the internal diameter (c) of the hollow cylindrical brush body (17).

9. Brush according to one or more of preceding claims 7 and 8, **characterised in that** the fixing portion (27) is formed as a solid cylinder body.

10. Brush according to one or more of preceding claims 7, 8 and 9, **characterised in that** the fixing portion (27) is held in the brush body (17) in a rotationally engaged manner.

11. Brush according to one or more of preceding claims 7 to 10, **characterised in that** the fixing portion (27) has a gutter-shaped cross section, which gutters (29) bear press-fit projections (30) having an annular cross section and radial excess for rotationally engaged cooperation with the inner wall of the brush body (17).

12. Brush according to one or more of preceding claims 7 to 11, **characterised in that** the fixing portion (27) and the bearing portion (22), which form an insertion portion (26), are formed in one piece.

13. Brush according to claim 12, **characterised in that** the insertion portion (26) is formed in one piece with the closure cap (24).

14. Brush according to one or more of preceding claims 12 and 13, **characterised in that** the insertion portion (26) is produced in one piece with the closure cap (24) in the plastics injection-moulding process.

15. Brush according to one or more of the preceding claims, **characterised in that** the external diameter (a) of the closure cap (24) corresponds to the external diameter of the brush body (17) in the region of the bristle attachment (25).

## Revendications

1. Brosse (16), en particulier brosse (16) pour aménager dans un appareil adaptable (1) d'un aspirateur électrique, comprenant un corps de brosse (17) et des crins (19) qui y sont fixés, dans laquelle brosse le corps de brosse (17) présente, dans la zone d'une extrémité, une configuration de couplage (20) pour coopérer en rotation avec un arbre (8) entraîné côté appareil et, dans la zone de l'autre extrémité, une coiffe de fermeture (24), dans laquelle l'arbre d'entraînement (8) est supporté dans la direction radiale autant dans la zone de la configuration de couplage que dans la zone d'extrémité tournée vers la coiffe de fermeture (24), **caractérisée en ce que** l'appui radial côté coiffe de l'arbre (8) est formé par une section de palier (22) agissant de manière élastique sur l'arbre (8) dans la direction radiale.

2. Brosse selon la revendication 1, **caractérisée en ce que** la section de palier (22) est formée sur une partie rapportée séparée (23), dans laquelle, de préférence la partie rapportée (23) est constituée d'un matériau synthétique et **en ce que** la configuration élastique de la section de palier (22) par découpe libres de sections d'appui individuelles (34) dans la section de palier (22).

3. Brosse selon une ou plusieurs des revendications précédentes, **caractérisée en ce que** les sections d'appui (34) coopèrent avec une section d'extrémité cylindrique circulaire (21) de l'arbre (8).

4. Brosse selon une ou plusieurs des revendications précédentes, **caractérisée en ce que** la section de palier (22) a une conformation cylindrique creuse avec un diamètre interne (d), qui est adapté au diamètre externe (e) de l'arbre.

5. Brosse selon une ou plusieurs des revendications précédentes, **caractérisée en ce que**, sur la périphérie de la section de palier (22), il apparaît quatre sections d'appui (34) régulièrement espacées l'une de l'autre.

6. Brosse selon une ou plusieurs des revendications précédentes, **caractérisée en ce que** la section de palier (22) est formée dans la zone de l'extrémité libre de la partie rapportée (23) entrant dans l'espace creux de la brosse et **en ce que** les sections d'appui (34) affectées à l'extrémité libre de la section de palier (22) sont liées l'une à l'autre sur la périphérie.

7. Brosse selon une ou plusieurs des revendications précédentes, **caractérisée en ce que** la section de palier (22) opposée à l'extrémité libre de la partie rapportée (23) se fond en une zone de fixation (27) de plus grand diamètre externe.

8. Brosse selon la revendication 7, **caractérisée en ce que** le diamètre externe (c) de la zone de fixation (27) correspond à 1,05 à 1,2 fois le diamètre externe de la section de palier (22) et/ou **en ce que** le diamètre externe de la zone de fixation (27) est adapté au diamètre interne (c) du corps de brosse cylindrique creux (17).

9. Brosse selon une ou plusieurs des revendications 7 et 8, **caractérisée en ce que** la section de fixation (27) se présente sous la forme d'un corps cylindrique massif.

10. Brosse selon une ou plusieurs des revendications 7, 8 et 9, **caractérisée en ce que** la section de fixation (27) est montée solidaire en rotation dans le corps de brosse (17).

11. Brosse selon une ou plusieurs des revendications 7 à 10, **caractérisée en ce que** la section de fixation (27) présente une section transversale à croisillons, lesquels croisillons (29) portent, pour coopérer de manière solidaire en rotation avec la paroi interne du corps de brosse (17), des protubérances d'ajustement serré (30) annulaires en coupe transversale et pourvues d'une surépaisseur radiale.

12. Brosse selon une ou plusieurs des revendications 7 à 11, **caractérisée en ce que** la section de fixation (27) et la section de palier (22), formant une section d'enfichage (26), sont conformées d'un seul tenant.

13. Brosse selon la revendication 12, **caractérisée en ce que** la section d'enfichage (26) est formée d'une seule pièce avec la coiffe de fermeture (24).

14. Brosse selon une ou plusieurs des revendications 12 et 13, **caractérisée en ce que** la section d'enfichage (26) est fabriquée d'une seule pièce avec la coiffe de fermeture (24) lors du procédé de moulage par injection de matière synthétique.

15. Brosse selon une ou plusieurs des revendications précédentes, **caractérisée en ce que** le diamètre externe (a) de la coiffe de fermeture (24) correspond au diamètre externe du corps de brosse (17) dans la zone de l'insertion de crins (25).
